Europäisches Patentamt

European Patent Office

Office européen des brevets

(19)

(11) Veröffentlichungsnummer: **0 033 092**
**B1**

(12) **EUROPÄISCHE PATENTSCHRIFT**

(45) Veröffentlichungstag der Patentschrift:
**08.08.84**

(51) Int. Cl.³: **B 62 B 5/06,** B 62 B 1/12

(21) Anmeldenummer: **81100241.9**

(22) Anmeldetag: **15.01.81**

(54) **Transportroller, insbesondere Einkaufsroller.**

(30) Priorität: **26.01.80 DE 3002845**

(43) Veröffentlichungstag der Anmeldung:
**05.08.81 Patentblatt 81/31**

(45) Bekanntmachung des Hinweises auf die Patenterteilung:
**08.08.84 Patentblatt 84/32**

(84) Benannte Vertragsstaaten:
**AT BE CH FR GB IT LI NL SE**

(56) Entgegenhaltungen:
**DE - C - 567 396**
**GB - A - 1 376 745**
**US - A - 2 757 935**
**US - A - 3 197 226**
**US - A - 3 998 476**
**US - A - 4 072 319**

(73) Patentinhaber: **LEIFHEIT INTERNATIONAL GmbH,**
**Leifheitstrasse, D-5408 Nassau/Lahn (DE)**

(72) Erfinder: **Pätzold, Dieter, Scheubachweg 7,**
**D-5408 Nassau (DE)**
Erfinder: **Schreiber, Alfons, Dipl.-Designer,**
**Schulstrasse 11, D-5409 Obernhof/Lahn (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft einen Transportroller, insbesondere Einkaufsroller gemäß dem Oberbegriff des Anspruchs 1.

Bei diesem bekannten Transportroller nach der GB-A-1 376 745 ist an dem Hauptrahmen ein federbelasteter Zapfen vorgesehen, der in eine im Griffteil vorgesehene Ausnehmung einrastbar ist. Durch Herausziehen des Zapfens entgegen der Wirkung der Feder kann das Griffteil gegenüber dem Hauptrahmen verschoben und somit in die eingeschobene Stellung oder in die herausgezogene Stellung überführt werden. Die herausgezogene Stellung entspricht dabei der Betriebsstellung. Bei einem Nichtbenutzen des Transportrollers wird der Griffteil in die eingeschobene Stellung überführt, damit der Transportroller wenig Raum beansprucht.

Da ein entgegen der Wirkung einer Feder herausziehbarer Zapfen vorgesehen ist, entstehen Schwierigkeiten beim Herausziehen und beim Einschieben des Griffteils.

Der Erfindung liegt die Aufgabe zugrunde, einen Transportroller insbesondere Einkaufsroller der eingangs erläuterten Art zu schaffen, bei dem das Einschieben und Herausziehen des Griffteiles in einfacher Weise vorgenommen werden kann, ohne daß die Festsetzung des Griffteils insbesondere in der ausgezogenen Stellung zu beeinträchtigen.

Diese Aufgabe wird erfindungsgemäß durch die kennzeichnenden Merkmale des Anspruchs 1 gelöst. In der ausgezogenen Stellung des Griffteils greifen die Rastvorsprünge in die Rastausnehmungen ein, so daß der Griffteil zuverlässig in der ausgezogenen Stellung gehalten ist. Der Griffteil kann dabei durch einfaches Einschieben in die eingeschobene Stellung überführt werden, wobei lediglich am Anfang der Einschiebebewegung die Haltekraft der Verrastung zu überwinden ist. Dies kann in einfacher Weise durch einen Schlag mit der Hand von oben auf den Griffteil erfolgen.

Die beiden oberen Führungen der beiden Schenkel des aus einem U-förmigen Bügel gebildeten Griffteils können an dem Scheitelteil des ebenfalls von einem U-förmigen Bügel gebildeten Hauptrahmen vorgesehen sein, während die beiden unteren Führungen der beiden Griffteilschenkel an einem die beiden Hauptrahmenschenkel miteinander verbindenden Quersteg vorgesehen sind. Durch die mit Abstand zueinander angeordneten beiden Führungen für jeden Griffteilschenkel ist in einfacher Weise ein alle Belastungen standhaltende Halterung des verschiebbaren Griffteilbügels geschaffen.

Die obere Führung für den Griffteilschenkel kann aus zwei gleichachsig zueinander angeordneten Führungsbüchsen bestehen, die mit einer zum Aufsetzen auf dem Scheitelteil des Hauptrahmens aufspreizbaren Schelle miteinander verbunden sind. Dadurch sind in einfacher Weise die beiden oberen Führungen auf dem Scheitelteil des Hauptrahmens aufsetzbar und nach dem Einstecken des Griffteilschenkels in den beiden Führungsbüchsen einer jeden Führung zuverlässig gehalten.

Die Führungsbüchsen können an ihren zylindrischen inneren Mantelflächen axial verlaufende rippenförmige Vorsprünge aufweisen, die mit ihren teilzylinderförmigen Anlageflächen gegen den eine zylindrische äußere Mantelfläche aufweisenden Griffteilschenkel anliegen. Da die Führungsbüchsen lediglich mit den axial verlaufenden rippenförmigen Vorsprüngen gegen die äußere Mantelfläche des eingesteckten Griffteilschenkels anliegen, wird in einfacher Weise eine wartungsfreie, ein Verschieben des Griffteilschenkels zulassende Lagerung für den Griffteilschenkel geschaffen.

Die zum Aufsetzen auf den Scheitelteil des Hauptrahmens aufspreizbare Schelle kann an ihrer inneren Mantelfläche einen in Aufsteckrichtung verlaufenden, angespitzten Dorn aufweisen, der in eine entsprechende Aussparung im Scheitelteil des Hauptrahmens eingreift. Dadurch ist in einfacher Weise die obere Führung gegen Verschieben und Verdrehen gesichert am Scheitelteil des Hauptrahmens gehaltert.

Die obere Führung für den Griffteilschenkel kann einstückig aus Kunststoff gefertigt sein. Dadurch wird eine einfache Fertigung erzielt.

An der äußeren Mantelfläche der Führungsbüchse ist eine rohrförmige Aufnahme zum Einstecken des die beiden Hauptrahmenschenkel miteinander verbindenden Querstegs vorgesehen. Dadurch können die beiden unteren Führungen ebenfalls in einfacher Weise durch Einstecken des Querstegs an dem die beiden Hauptrahmenschenkel miteinander verbindenden Quersteg gehaltert werden.

Die Führungsbüchse kann an ihrer zylindrischen inneren Mantelfläche axial verlaufende rippenförmige Vorsprünge aufweisen, die mit ihren teilzylinderförmigen Anlageflächen gegen den eine zylindrische äußere Mantelfläche aufweisenden Griffteilschenkel anliegen. Dadurch sind die Griffteilschenkel in einfacher Weise ebenfalls wartungsfrei in den unteren Führungen verschiebbar gehalten.

Die untere Führung für den Griffteilschenkel kann ebenfalls einstückig aus Kunststoff gefertigt sein. Dadurch können auch die unteren Führungen in einfacher Weise gefertigt werden.

Die aus Kunststoff gefertigten Endstücke können mit abgesetzten Ansätzen in den freien Enden der Griffteilschenkel formschlüssig durch Festkörnen gehalten sein. Dadurch sind die Endstücke in besonders einfacher Weise an den Enden der Griffteilschenkel gehalten.

Die dem Griffteilschenkel zugekehrte Seitenfläche der die Rastausnehmung bildenden umlaufende Nut des Endstückes kann an ihrem äußeren Rand mit einer zum Aufspreizen des die Rastvorsprünge aufweisenden axial geschlitzten Verlängerung der unteren Führung dienenden Abrundung versehen sein. Mit dieser Abrundung wird das Verschieben des Griffteiles aus der verrasteten Stellung ermöglicht.

Die Rastvorsprünge können an ihren den Abrundungen der Seitenfläche der umlaufenden Nut zugekehrten Seite ebenfalls mit Abrundungen versehen sein. Dadurch wird auch an dieser Seite das Herausbringen des Griffteiles aus der verrasteten Stellung erleichtert.

Die dem Griffteilschenkel abgekehrte zweite Seitenfläche der die Rastausnehmung bildenden umlaufenden Nut des Endstückes kann mit den Rastvorsprüngen der unteren Führung einen Endanschlag für die Verschiebbarkeit des Griffteiles bilden. Mit diesem Endanschlag wird somit ein vollständiges Herausziehen des Griffteiles aus den Führungen verhindert.

Das freie Ende des Endstückes kann mit einer konischen Anfasung versehen sein. Dadurch wird in einfacher Weise bei der Montage ein Einschieben des Griffteiles in die Führungen ermöglicht, da mit der konischen Anfasung die federnden Rastvorsprünge auseinandergedrückt werden.

Die lichte Weite der Schlitze der rohrförmigen Verlängerung der Führungsbüchse der unteren Führung kann der Breite der rippenförmigen Vorsprünge an der inneren zylindrischen Mantelfläche der Führungsbüchsen der oberen und der unteren Führung entsprechend und fluchtend zueinander angeordnet sein. Dadurch wird die Fertigung der Führung vereinfacht und die von den Schlitzen voneinander abgeteilten Abschnitte der die Rastvorsprünge aufweisenden Verlängerung sind nicht durch die rippenförmigen Vorsprünge verstärkt, so daß ein Aufspreizen in einfacher Weise möglich ist.

Das aus dem Griffteilschenkel herausragende Ende des Endstückes kann einen den Außendurchmesser des Griffteilschenkels überschreitenden Durchmesser aufweisen und im wesentlichen dem Innendurchmesser der die axial verlaufenden rippenförmigen Vorsprünge aufweisenden inneren Mantelfläche der Führungsbüchse entsprechen und dabei axial verlaufende, den rippenförmigen Vorsprüngen entsprechende Nuten aufweisen. Die Endstücke können somit einen Außendurchmesser aufweisen, der den Außendurchmesser der Griffteilschenkel überschreitet, um eine einfache Verrastung zu erzielen. Trotzdem kann der Griffteil mit diesen Endstücken bei der Montage durch die Führungen eingesetzt werden.

Das aus dem Griffteilschenkel herausragende Ende des Endstückes kann vier axial verlaufende Nuten und die Führungsbüchsen vier axial verlaufende rippenförmige Vorsprünge aufweisen. Mit diesen vier axial verlaufenden rippenförmigen Vorsprüngen wird somit eine einwandfreie Führung der Griffteilschenkel erzielt. Die Endstücke weisen eine entsprechende Anzahl von Nuten auf, um das Einführen zu ermöglichen.

Der Griffteilschenkel kann an seinem freien Ende eine umlaufende Sicke als Rastausnehmung aufweisen und das Ende flanschartig als Endanschlag nach außen verlaufen. Bei dieser Ausführungsform ist die Rastausnehmung in einfacher Weise dem Ende des Griffteilschenkels unmittelbar als umlaufende Sicke eingeformt, wobei der Endanschlag von dem flanschartig nach außen verlaufenden Ende gebildet ist.

Das in das freie Ende des Griffteilschenkels eingesetzte Endstück kann einen Flansch mit einem geschlitzten, rohrförmigen Ansatz aufweisen, an dessen innere Mantelfläche nasenförmige Vorsprünge angeformt sind, die mit an der äußeren Mantelfläche der Führungsbüchse der unteren Führung vorgesehenen nasenförmigen Vorsprüngen als Verrastung zusammenwirken. Bei dieser Ausführungsform sind in einfacher Weise die Rastvorsprünge an dem Endstück und die Rastausnehmungen an der Führungsbüchse vorgesehen.

Das freie Ende des von einem Zylinderrohr gebildeten Griffteilschenkels kann abgeplattet sein und die Führungsbüchse der unteren Führung einen entsprechend gestalteten, als Endanschlag dienenden Durchbruch aufweisen und die rohrförmige, axial geschlitzte Verlängerung der Führungsbüchse kann an der inneren Mantelfläche als Rastvorsprünge dienende rippenförmige Vorsprünge aufweisen, die mit den Schrägflächen der Abplattung als Verrastung zusammenwirken. Durch das Abplatten des freien Endes des Griffteilschenkels wird somit in einfacher Weise ein Endanschlag gebildet, wobei die Schrägflächen der Abplattung zugleich für die Verrastung herangezogen werden.

Der Griffschenkel kann an seinem freien Ende Endanschläge aufweisen, die von nach außen herausgewinkelten, gestanzten Zungen gebildet sind und die geneigt verlaufenden Rücken der Zungen können als Spreizflächen für die Rastvorsprünge dienen. Dadurch werden ebenfalls in einfacher Weise Teile der Griffteilschenkel für die Bildung der Endanschläge herangezogen, wobei die nach außen herausgewinkelten, gestanzten Zungen mit ihren geneigt verlaufenden Rücken zugleich Spreizflächen für die Rastvorsprünge bilden.

Auf dem die beiden Hauptrahmenschenkel miteinander verbindenden und die beiden unteren Führungen tragenden Quersteg können Distanzhülsen zwischen den beiden unteren Führungen und zwischen den unteren Führungen und den Hauptrahmenschenkel aufgesetzt sein. Dadurch werden in einfacher Weise auch die auf den Quersteg aufgesteckten unteren Führungen in ihren vorbestimmten Stellungen gehalten und gegen Verschieben gesichert.

Auf der Zeichnung ist die Erfindung in mehreren Ausführungsbeispielen dargestellt, und zwar zeigt

Fig. 1 einen erfindungsgemäßen Transportroller in Form eines Einkaufsrollers in schaubildlicher Darstellung in der Betriebsstellung mit herausgezogenem Griffteil,

Fig. 2 den Transportroller in schaubildlicher Darstellung mit eingeschobenem Griffteil,

Fig. 3 den Transportroller in schaubildlicher Darstellung mit eingeschobenem Griffteil und hochgeklapptem Auflagerahmen,

Fig. 4 einen Griffteilschenkel mit den zugehörigen beiden Führungen in Vorderansicht, teilweise weggebrochen,

Fig. 5 einen Schnitt nach der Linie V-V der Fig. 4,

Fig. 6 einen Schnitt nach der Linie VI-VI der Fig. 4,

Fig. 7 einen Schnitt nach der Linie VII-VII der Fig. 4,

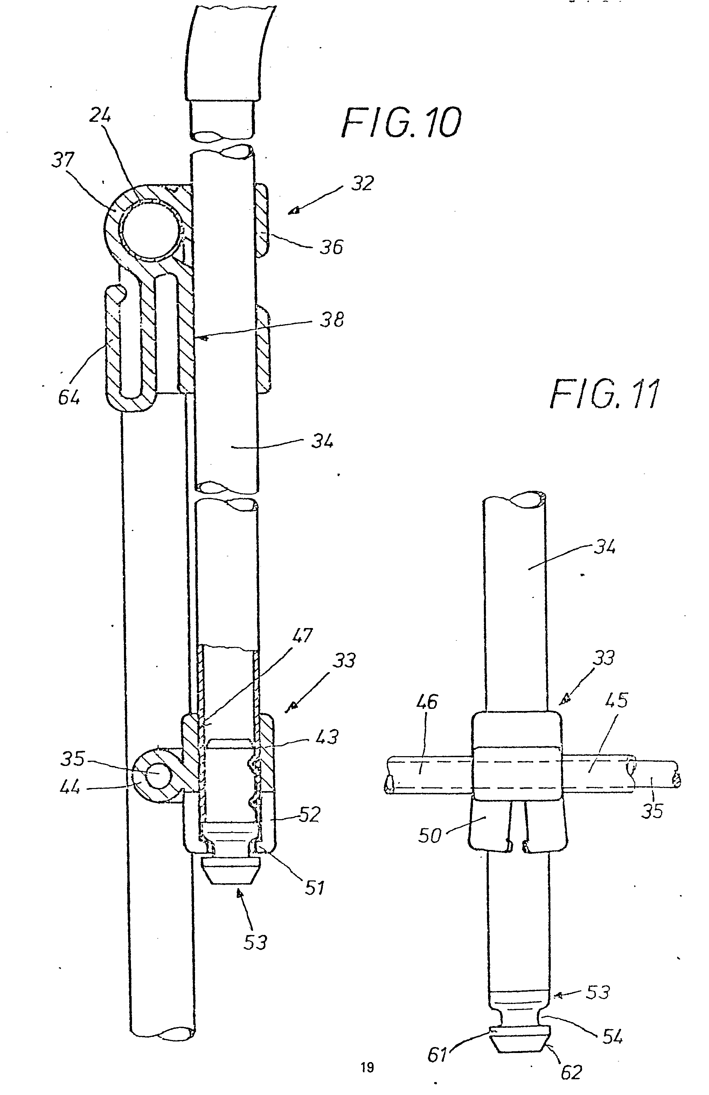

Fig. 8 einen Schnitt nach der Linie VIII-VIII der Fig. 5,

Fig. 9 einen Schnitt nach der Linie IX-IX der Fig. 4,

Fig. 10 einen Griffteilschenkel mit den zugehörigen Führungen in einer zweiten Ausführungsform, teilweise im Schnitt,

Fig. 11 die in der Fig. 10 dargestellte Ausführungsform, bei der der Griffteilschenkel eingeschoben ist,

Fig. 12 die Verrastung des Griffteilschenkels einer weiteren Ausführungsform, teilweise im Schnitt,

Fig. 13 eine weitere Ausführungsform des Griffteilschenkels, teilweise im Schnitt,

Fig. 14 einen Schnitt nach der Linie XV-XV der Fig. 14,

Fig. 15 eine weitere Ausführung des Griffteilschenkels teilweise im Schnitt,

Fig. 16 das untere Ende des Griffteilschenkels in einer weiteren Ausführungsform und

Fig. 17 einen Schnitt nach der Linie XVIII-XVIII der Fig. 17.

Der auf der Zeichnung dargestellte Transportroller in Form eines Einkaufsrollers besteht aus einem von Rädern 20 getragenen und im wesentlichen senkrecht angeordneten Hauptrahmen 21 und einem an dessen unterem Ende vorgesehenen Auflagerahmen 22 für einen am Hauptrahmen 21 befestigbaren Behälter. Der am Hauptrahmen befestigbare Behälter kann in bekannter Weise taschenförmig ausgebildet sein und somit einen bekannten Aufbau aufweisen, so daß er auf der Zeichnung der Einfachheit halber nicht näher dargestellt ist.

Der im wesentlichen senkrecht angeordnete Hauptrahmen 21 ist von einem im wesentlichen U-förmigen Rohrbügel 23 gebildet, dessen Scheitelteil 24 nach oben gerichtet ist. An den beiden freien Enden der Hauptrahmenschenkel 25 ist eine nicht näher dargestellte durchgehende Achse für die Lauräder 20 vorgesehen. Die Achse durchgreift dabei nicht näher dargestellte Durchbrüche der Hauptrahmenschenkelenden des U-förmigen Rohrbügels 23. Die Lauräder 20 sind dabei auf den Achsenden aufgesetzt, die aus den einander abgekehrten Seiten des Hauptrahmens 21 herausragen.

Der Auflagerahmen 22 für den am Hauptrahmen 21 befestigbaren Behälter ist mit zwei Streben 26 in seiner Wirkstellung gehalten. Die Streben 26 greifen dabei mit ihren einen Enden an der Vorderkante des Auflagerahmens 22 an und sind mit ihren anderen Enden oberhalb des Auflagerahmens 22 an dem U-förmigen Rohrbügel 23 des Hauptrahmens 21 gehaltert. Die beiden Streben 26 nehmen dabei den Behälter zwischen sich auf.

Die beiden Streben 26 weisen an ihren mit dem Auflagerahmen 22 verbundenen Enden nach unten gerichtete Verlängerungen 27 auf, die als Standfuß für den Einkaufsroller dienen. Die beiden nach unten gerichteten Verlängerungen 27 sind mit einem Scheitelteil 28 miteinander verbunden.

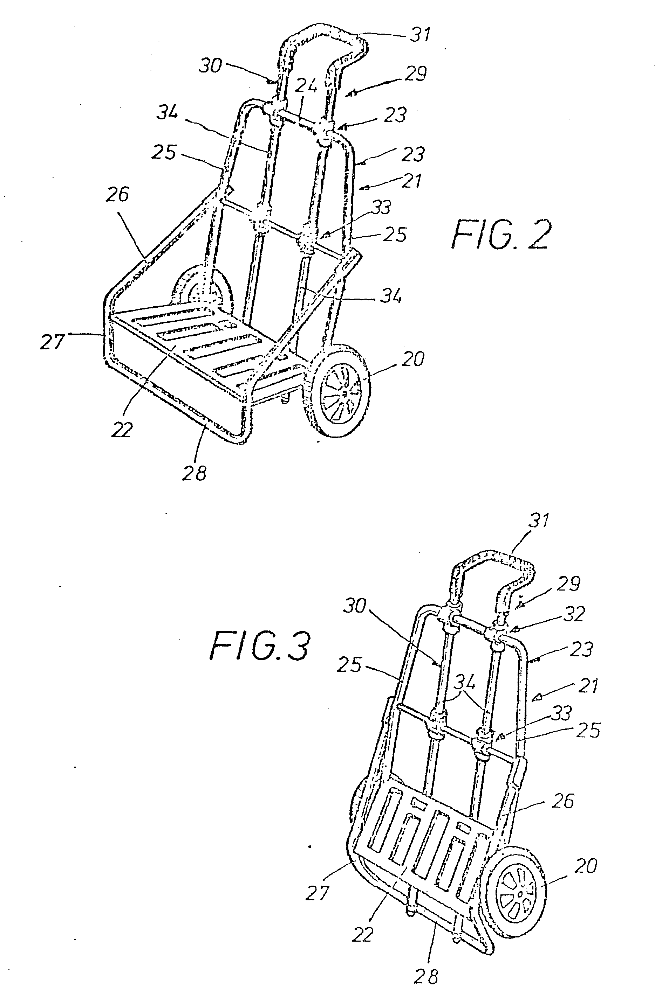

Wie insbesondere aus den Fig. 1 bis 3 ersichtlich, ist der Auflagerahmen 22 mit seinem rückwärtigen Ende an der Achse der Lauräder 20 und mit seinem vorderen Ende an einer die beiden Streben 26 miteinander verbindenden, nicht näher dargestellten Querstrebe verbunden. Der Auflagerahmen 22 ist dabei mit seinem vorderen Ende schwenkbar und mit seinem hinteren Ende lösbar an der Achse der Lauräder 20 gehaltert. Der Auflagerahmen 22 kann somit in die Stellung hochgeklappt werden, die in der Fig. 3 dargestellt wird. Dadurch ist das Fahrgestell des Einkaufsrollers in einfacher Weise zum Verpacken und für den Versand zusammenklappbar, so daß das Fahrgestell nur einen geringen Raumbedarf aufweist.

An dem Hauptrahmen 21 ist ein Griffteil 29 verschiebbar gehaltert. Der Griffteil 29 ist dabei von einem U-förmigen Rohrbügel 30 gebildet, wobei der Scheitelteil 31 des U-förmigen Rohrbügels nach oben ragt und zum Anfassen dient. Das den Scheitelteil 31 aufweisende obere Ende des U-förmigen Rohrbügels 30 ist dazu etwas nach hinten abgewinkelt.

Wie bereits erwähnt, ist der von dem U-förmigen Rohrbügel 30 gebildete Griffteil 29 verschiebbar am Hauptrahmen 21 gehaltert. Hierzu weist der Hauptrahmen 21 jeweils zwei Führungen 32 und 33 auf, die von den Griffteilschenkeln 34 durchgriffen werden. In der Fig. 1 ist der Griffteil 29 in der ausgezogenen Stellung dargestellt, die der Betriebsstellung des Transportrollers entspricht. Zum Verpacken, Wegstellen des Transportrollers od. dgl. kann der Griffteil 29 derart gegenüber dem Hauptrahmen 21 verschoben werden, daß er nicht mehr so weit über den Hauptrahmen 21 vorsteht. Diese Stellung ist in der Fig. 3 dargestellt, in der die freien Enden der Griffteilschenkel 34 zugleich den Scheitelteil 28 der Verlängerungen 27 der Streben 26 übergreifen, nachdem der Auflagerahmen 20 hochgeklappt ist. Dadurch wird zugleich in einfacher Weise der hochgeklappte Auflagerahmen 22 in dieser Stellung gehalten, da die Streben 26 nicht nach vorne geschwenkt werden können.

Aus den Fig. 1 bis 3 ist ersichtlich, daß jeder Griffteilschenkel 34 jeweils mit einer oberen Führung 32 und einer Führung 33 an dem Hauptrahmen 21 gehaltert ist. Die obere Führung 32 ist dabei an dem Scheitelteil 24 des den Auflagerahmen 22 bildenden U-förmigen Rohrbügels 21 und die untere Führung 23 an einem die beiden Hauptrahmenschenkel 25 miteinander verbindenden Quersteg 35 gehaltert, der zugleich für die schwenkbare Lagerung der Streben 26 am Hauptrahmen 21 dient.

Wie insbesondere aus der Fig. 5 ersichtlich, besteht die obere Führung 32 für den Griffteilschenkel 34 aus zwei gleichachsig zueinander angeordneten Führungsbüchsen 36, die mit einer zum Aufsetzen auf den Scheitelteil 24 des Hauptrahmens 21 aufspreizbaren Schelle 37 miteinander verbunden sind. Die Führungsbüchsen 36 weisen an ihren zylindrischen inneren Mantelflächen 38 jeweils vier axial verlaufende rippenförmige Vorsprünge 39 auf, die mit ihren teilzylinderförmigen Anlageflächen 40 gegen den eine zylindrische äußere Mantelfläche aufweisenden Griffteilschenkel 34 anliegen. Dadurch wird in einfacher Weise eine wartungsfreie Lagerung des Griffteilschenkels 34 in den Führungsbüchsen 36 der oberen Führung 32 geschaffen.

Die zum Aufsetzen auf den Scheitelteil 24 des Hauptrahmens 21 aufspreizbare Schelle 37 weist an ihrer inneren Mantelfläche einen in Aufsteckrichtung verlaufenden, angespitzten Dorn 41 auf, der in eine entsprechende Aussparung 42 im Scheitelteil 24 des Hauptrahmens 21 eingreift. Nach dem Aufsetzen der oberen Führung 32 auf den Scheitelteil 24 des Hauptrahmens ist somit die obere Führung 32 gegen Verschieben und Verdrehen gesichert. Nach dem Einstecken des Griffteilschenkels 34 in die beiden Führungsbüchsen 36 der oberen Führung 32 ist auch ein Aufspreizen der Schelle 37 nicht mehr möglich, so daß die obere Führung 32 zuverlässig an dem Scheitelteil 24 des Hauptrahmens 21 gehalten ist und zuverlässig den Griffteilschenkel 34 verschiebbar aufnimmt.

Die obere Führung 32 für den Griffteilschenkel 34 ist einstückig aus Kunststoff gefertigt und somit wohlfeil herstellbar und weist dabei auch die erforderliche Elastizität für das Aufspreizen der Schelle 37 beim Aufstecken auf den Scheitelteil 24 des Auflagerahmens 22 auf.

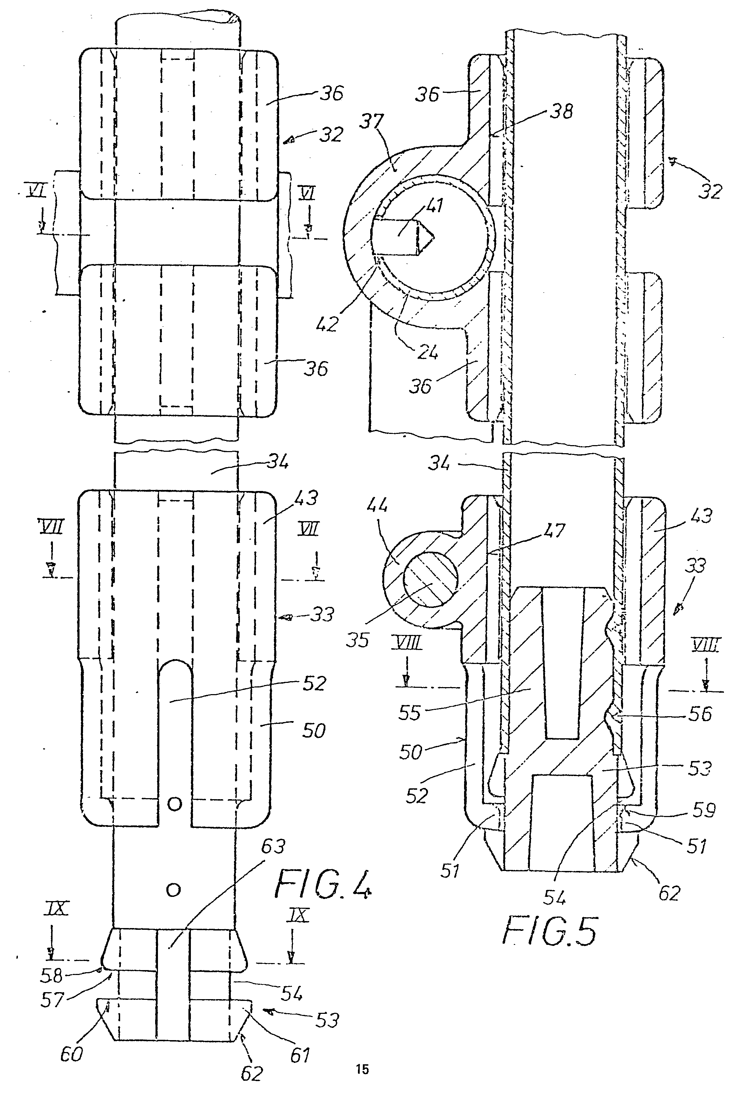

Die untere Führung 33 für den Griffteilschenkel 34 weist, wie ebenfalls aus den Fig. 4 und 5 ersichtlich, eine Führungsbüchse 43 auf, an deren äußeren Mantelfläche eine rohrförmige Aufnahme 44 zum Einstecken des die beiden Hauptrahmenschenkel 25 miteinander verbindenden Quersteges 35 vorgesehen ist. Bei der Montage sind somit die beiden unteren Führungen 33 lediglich mit ihren rohrförmigen Aufnahmen 44 auf den Quersteg 35 aufzustecken. Dabei sind zwischen den beiden unteren Führungen 33 eine Distanzhülse 45 und zwischen den beiden unteren Führungen 33 und den beiden Hauptrahmenschenkel 25 je eine Distanzhülse 46 aufgesteckt, so daß die beiden unteren Rührungen 33 in einem vorbestimmten Abstand zueinander gehalten werden und sich nicht seitlich verschieben können.

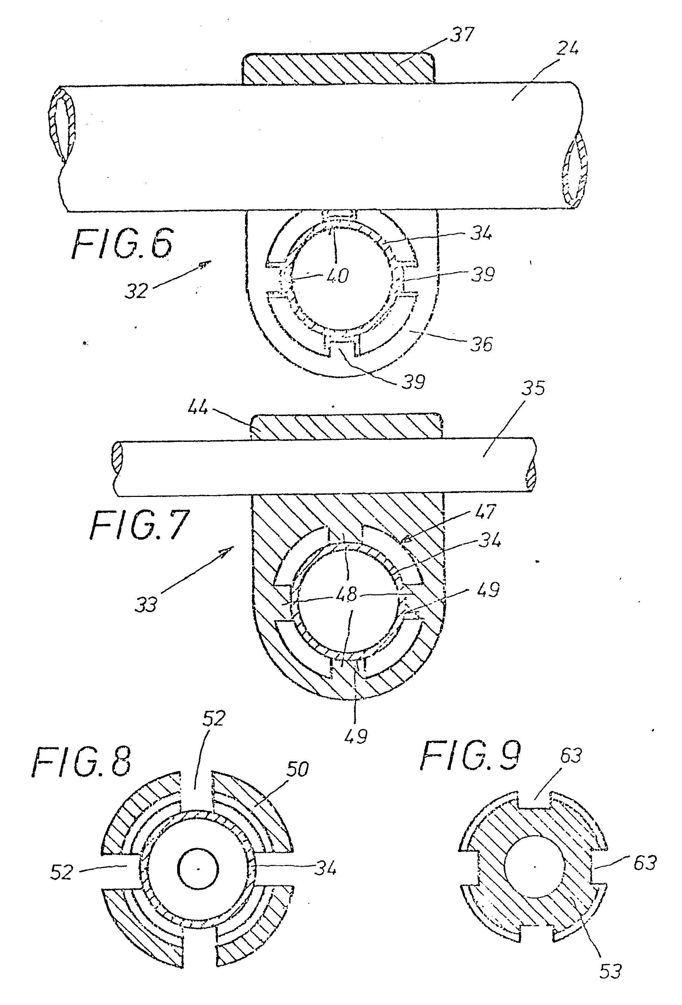

Die Führungsbüchse 43 der unteren Führung 33 weist, wie insbesondere aus der Fig. 7 ersichtlich, an ihrer zylindrischen inneren Mantelfläche 47 ebenfalls vier gleichmäßig auf dem Umfang verteilte axial verlaufende rippenförmige Vorsprünge 48 auf, die mit ihren teilzylinderförmigen Anlageflächen 49 gegen die zylindrische äußere Mantelfläche des Griffteilschenkels 34 anliegen. Somit ist der Griffteilschenkel 34 auch in der unteren Führung 33 wartungsfrei und verschiebbar gehaltert.

Die Führungsbüchse 43 der unteren Führung 33 weist an ihrer unteren Stirnfläche eine rohrförmige, axial geschlitzte Verlängerung 50 auf, deren freies Ende zur Bildung von Rastvorsprüngen 51 nach innen abgewinkelt ist. Durch die Schlitze 52 in der Verlängerung 50 der Führungsbüchse 43 ist somit ein elastisches Aufspreizen der Rastvorsprünge 51 möglich, die in den in Fig. 4 dargestellten Grundstellung etwa gegen die äußere Mantelfläche des Griffteilschenkels 34 anliegen.

Um für das Aufspreizen der Rastvorsprünge 51 die erforderliche Elastizität zu erhalten, ist auch die untere Führung 33 für den Griffteilschenkel 34 einstückig aus Kunststoff gefertigt, so daß eine einfache Herstellung gewährleistet ist.

Der den Griffteil 29 bildende U-förmige Bügel 30 ist aus einem Rohrabschnitt gebildet, wobei in den freien Enden der Griffteilschenkel 34 Endstücke 53 eingesetzt sind. Das aus dem Ende der Griffteilschenkel 34 herausragende Ende des Endstückes 53 weist eine mit den Rastvorsprüngen 51 der unteren Führungen 33 zusammenwirkende, je eine Rastausnehmung bildende, umlaufende Nut 54 auf. In der Fig. 5 ist die Stellung dargestellt, in der die Rastvorsprünge 51 in die als Rastausnehmung wirkende Nut 54 eingreifen. In dieser Stellung ist der Griffteilschenkel 34 in einfacher Weise gegen unbeabsichtigtes Verschieben gesichert.

Die aus Kunststoff gefertigten Endstücke 53 sind mit abgesetzten Ansätzen 55 in den freien Enden der Griffteilschenkel 34 formschlüssig durch Festkörnen gehalten. Die durch das Festkörnen gebildeten Verformungen sind in der Fig. 5 mit dem Bezugszeichen 56 versehen. Die Endstücke 53 sind dadurch in einfacher und wohlfeiler Weise an den Griffteilschenkeln 34 gehalten.

Die dem Griffteilschenkel 34 zugekehrte Seitenfläche 57 der die Rastausnehmung bildenden umlaufenden Nut 54 des Endstückes 53 ist an ihrem äußeren Rand mit einer zum Aufspreizen des die Rastvorsprünge 51 aufweisenden, axial geschlitzten Verlängerung 50 der unteren Führung 33 dienenden Abrundung 58 versehen. Ebenso sind auch die Rastvorsprünge 51 an ihren den Abrundungen 58 der Seitenfläche 57 der umlaufenden Nut 54 zugekehrten Seite mit Abrundungen 59 versehen. Mit der Anwendung einer größeren Kraft auf den Griffteil 29 ist somit eine Verschiebung des Griffteiles 29 gegenüber dem Hauptrahmen 21 möglich. Durch die Abrundungen 58 und 59 werden die Rastvorsprünge 51 nach außen gedrängt, so daß die Verschiebung ermöglicht wird. Die erforderliche Verschiebekraft kann hierbei durch einen Schlag mit der Hand auf den Scheitelteil 31 des Griffteiles 29 aufgebracht werden. In der Fig. 4 ist die Stellung des Griffteilschenkels 34 dargestellt, in der der Griffteilschenkel 34 ein kleines Stück gegenüber der Verraststellung verschoben ist.

Die dem Griffteilschenkel 34 abgekehrte zweite Seitenfläche 60 der die Rastausnehmung bildenden umlaufenden Nut 54 des Endstückes 53 bildet mit den Rastvorsprüngen 51 der unteren Führung 33 einen Endanschlag 61 für die Verschiebbarkeit des Griffteiles 29. Damit wird sichergestellt, daß der Griffteil 29 nicht aus den unteren Führungen 33 hindurchgezogen werden kann. Das freie Ende des Endstückes 53 ist dabei mit einer konischen Anfasung 62 versehen. Dadurch wird bei der Montage des Transportrollers ein Einstecken des Griffteiles 29 mit seinen Griffteilschenkeln 34 in die oberen Führungen 32 und in die unteren Führungen 33 ermöglicht, da die Rastvorsprünge 51 gegen die konische Anfasung 62 zur Anlage kommt und dadurch die Rastvorsprünge 31 elastisch nach außen biegt, bis die Rastvorsprünge 51 in die umlaufende Nut 54 einschnappen.

Die lichte Weite der Schlitze 52 der rohrförmigen Verlängerung 50 der Führungsbüchse 43 der unteren Führung 33 entspricht der Breite der rippenförmigen Vorsprünge 39, 48 an den inneren zylindrischen Mantelflächen 38, 47 der Führungsbüchsen 36, 43 der oben und der unteren Führung 32, 33, wobei die Schlitze 52 und die rippenförmigen Vorsprünge 39, 48 fluchtend zueinander angeordnet sind. Dies ist insbesondere der Fig. 4 zu entnehmen. Dadurch wird erreicht, daß die rippenförmigen Vorsprünge 39, 48 lediglich bis zu den Schlitzen 52 ragen und die Verlängerung 50 der Führungsbüchse 43 der unteren Führung 33 nicht verstärken, so daß diese mit einer ausreichenden Elastizität versehen sind.

Wie insbesondere aus den Fig. 4 und 5 ersichtlich, weist das aus dem Griffteilschenkel 34 herausragende Ende des Endstückes 53 einen den Außendurchmesser des Griffteilschenkels 34 überschreitender Durchmesser auf und entspricht im wesentlichen dem Innendurchmesser der die axial verlaufenden rippenförmigen Vorsprünge 39, 48 aufweisenden inneren Mantelfläche 38, 47 der Führungsbüchse 36, 43 und weist dabei axial verlaufende, den rippenförmigen Vorsprüngen 39, 48 entsprechende Nuten 63 auf. Obwohl das aus dem Griffteilschenkel 34 herausragende Ende des Endstückes 53 einen den Außendurchmesser des Griffteilschenkels 34 überschreitenden Durchmesser aufweist, ist somit in einfacher Weise bei der Montage ein Einstecken des Griffteiles 29 in die oberen Führungen 32 und in die unteren Führungen 33 möglich, da die an die äußere Mantelfläche des Griffteilschenkels 34 zur Anlage kommenden rippenförmigen Vorsprünge 39, 48 durch die Nuten 63 der Endstücke 53 hindurchgeführt werden können. Die Nuten 63 der Endstücke fluchten dabei zu den Schlitzen 52 der unteren Führungen 33 und zu den rippenförmigen Vorsprüngen 39, 48 der Führungen 32 und 33. Jedes Endstück 53 ist somit mit vier Nuten 63 versehen, die gleichmäßig auf dem Umfang verteilt sind.

Bei dem in den Fig. 10 und 11 dargestellten Ausführungsbeispiel sind an den Führungsbüchsen 36, 43 der beiden Führungen 32 und 33 die rippenförmigen Vorsprünge 39, 48 fortgelassen, so daß die Führungsbüchsen 36, 43 unmittelbar mit ihren inneren Mantelflächen 38, 47 gegen die äußere Mantelfläche des Griffteilschenkels 34 zur Anlage kommen. Dadurch ist erforderlich, daß das aus dem Griffteilschenkel 34 herausragende Ende des Endstückes 53 mit seinem äußeren Durchmesser nicht über den äußeren Durchmesser des Griffteilschenkels vorsteht, um ein Einschieben der Griffteilschenkel 34 in die Führungen 32 und 33 zu ermöglichen. Die obere Führung 32 ist dabei auch noch zusätzlich mit einem Haken 64 versehen, der zur Befestigung des nicht näher dargestellten Behälters dient.

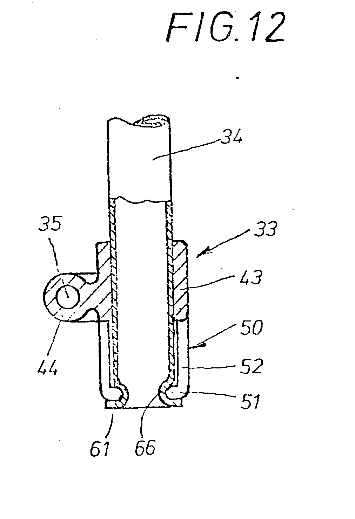

Bei dem in der Fig. 12 dargestellten Ausführungsbeispiel weist der Griffteilschenkel 34 an seinem freien Ende eine umlaufende Sicke 66 als Rastausnehmung auf, während das Ende des Griffteilschenkels 34 flanschartig als Endanschlag 61 nach außen verläuft. Diese Sicke 66 mit dem flanschartig nach außen verlaufenden Endanschlag 61 kann ebenfalls bei der Montage erst nach dem Einstecken der Griffteilschenkel in die Führungen 32 und 33 eingebracht werden.

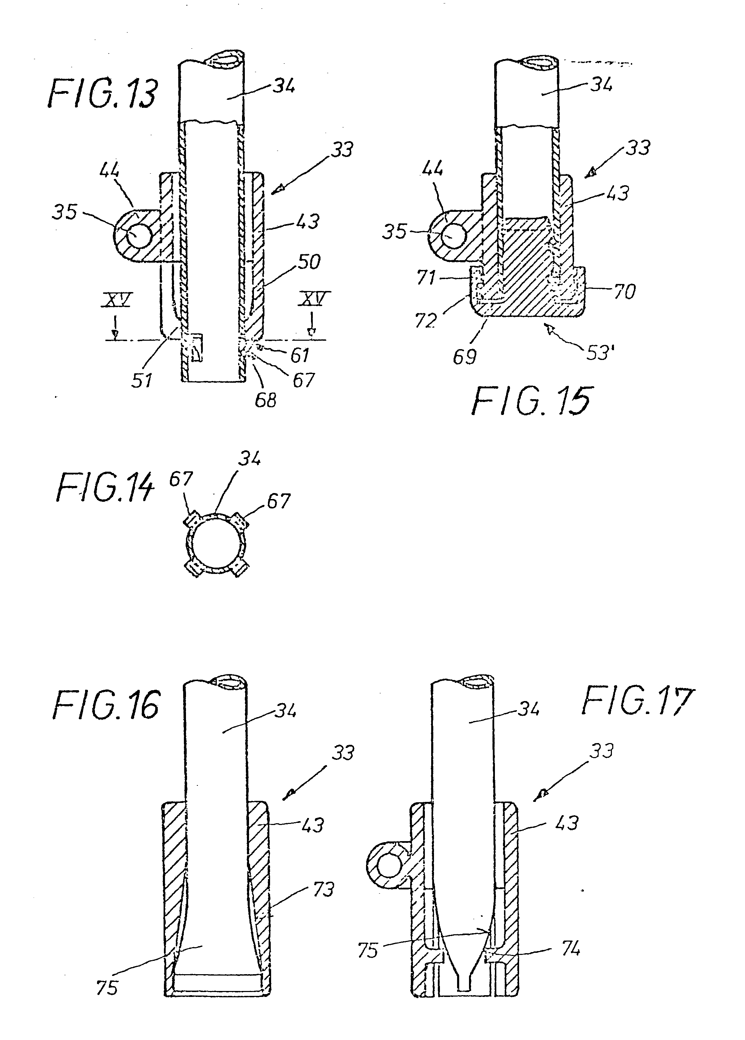

Bei dem in der Fig. 13 dargestellten Ausführungsbeispiel weist der Griffteilschenkel 34 an seinem freien Ende Endanschläge 61 auf, die von nach außen herausgewinkelten, gestanzten Zungen 67 gebildet sind, wobei die geneigt verlaufenden Rücken 68 der Zungen 67 als Spreizflächen für die Rastvorprünge 51 dienen. Diese Zungen können in einfacher Weise in die Griffteilschenkel 34 eingebracht werden, so daß eine wohlfeile Fertigung erzielt wird. Beim Einstecken der Griffteilschenkel 34 in die Führungen 32 und 33 werden mit den geneigt verlaufenden Rücken 68 der Zungen 67 die Rastvorsprünge 51 elastisch nach außen gedrückt, bis sie hinter die Zungen 67 schnappen.

Bei dem in der Fig. 15 dargestellten Ausführungsbeispiel weist das in das freie Ende des Griffteilschenkels 34 eingesetzte Endstück 53' einen Flansch 69 mit einem geschlitzten rohrförmigen Ansatz 70 auf, an dessen innerer Mantelfläche nasenförmige Vorsprünge 71 als Rastvorsprünge angeformt sind, die mit an der äußeren Mantelfläche der Führungsbüchse 43 der unteren Führung 33 vorgesehenen, nasenförmigen Vorsprüngen 72 als Verrastung zusammenwirken. Dadurch wird ebenfalls eine einfache Montage ermöglicht, da die Griffteilschenkel 34 zunächst in die Führung 32, 33 eingesteckt und dann das Endstück 53' in dem freien Ende des Griffteilschenkels 34 befestigt werden kann. Der an dem Endstück 53' vorgesehene Flansch 69 wirkt dabei zugleich als Endanschlag, der ein Herausziehen der Griffteilschenkel 34 aus den Führungen 33 verhindert.

Bei dem in den Fig. 16 und 17 dargestellten Ausführungsbeispiel ist das freie Ende des von einem Zylinderrohr gebildeten Griffteilschenkels 34 abgeplattet. Die Führungsbüchse 43 der unteren Führung 33 weist einen entsprechend gestalteten, als Endanschlag dienenden Durchbruch 73 auf. Die rohrförmige, axial geschlitzte Verlängerung 50 der Führungsbüchse 43 weist an der inneren Mantelfläche als Rastvorsprünge dienende rippenförmige Vorsprünge 74 auf, die mit den Schrägflächen 75 der Abplattung als Verrastung zusammenwirken.

**Patentansprüche**

1. Transportroller, insbesondere Einkaufsroller, mit einem von Rädern (20) getragenen und im wesentlichen senkrecht angeordneten Hauptrahmen (21) und einem an dessen unterem Ende vorgesehenen Auflagerahmen (22) für einen am Hauptrahmen befestigbaren Behälter, wobei der Hauptrahmen einen ausziehbaren und in der ausgezogenen Stellung festsetzbaren aus eine U-förmigen Bügel (30) mit nach unten ragenden, in Führungen des Hauptrahmens eingesetzten Schenkeln (34) gebildeten Griffteil (29) aufweist, wobei jeder der beiden Schenkel (34) des aus einem U-förmigen Bügel (30) gebildeten Griffteils (29) in jeweils am Hauptrahmen (21) vorgesehenen Führungen (32, 33) eingesetzt ist und eine Führung (33) einen federnden Rastvorsprung (51) aufweist, der mit einer an dem freien Ende des zugehörigen Schenkels (34) vorgesehenen Rastausnehmung (54) zusammenwirkt, dadurch gekennzeichnet, daß die Führungen aus einer oberen Führung (32) und einer unteren Führung (33) bestehen, wobei die untere Führung (33) eine Führungsbüchse (43) an deren unteren Stirnfläche eine rohrförmige, axial geschlitzte Verlängerung (50) aufweist, deren freies Ende zur Bildung von Rastvorsprüngen (51) nach innen abgewinkelt ist, und daß der den Griffteil (29) bildende U-förmige Bügel (30) aus einem Rohrabschnitt gebildet ist und in den freien Enden der Griffteilschenkel (34) Endstücke (53) eingesetzt sind, die an ihren aus den Enden der Griffteilschenkel (34) herausragenden Enden je eine mit den Rastvorsprüngen (51) der unteren Führungen (33) zusammenwirkende, je eine Rastausnehmung bildende, umlaufende Nut (54) aufweisen.

2. Transportroller nach Anspruch 1, dadurch gekennzeichnet, daß die beiden oberen Führungen (32) der beiden Schenkel (34) des aus einem U-förmigen Bügel (30) gebildeten Griffteils (29) an dem Scheitelteil (24) des ebenfalls von einem U-förmigen Bügel (23) gebildeten Hauptrahmens (21) vorgesehen sind, während die beiden unteren Führungen (33) der beiden Griffteilschenkel (34) an einem der beiden Hauptrahmenschenkel (25) miteinander verbindenden Quersteg (35) vorgesehen sind.

3. Transportroller nach Anspruch 1 oder 2, dadurch gekennzeichnet, daß die obere Führung (32) für den Griffteilschenkel (34) aus zwei gleichachsig zueinander angeordneten Führungsbüchsen (36) besteht, die mit einer zum Aufsetzen auf dem Scheitelteil (24) des Hauptrahmens (21) aufspreizbaren Schelle (37) miteinander verbunden sind.

4. Transportroller nach Anspruch 3, dadurch gekennzeichnet, daß die Führungsbüchsen (36) an ihren zylindrischen inneren Mantelflächen (38) axial verlaufende rippenförmige Vorsprünge (39) aufweisen, die mit ihren teilzylinderförmigen Anlageflächen (40) gegen den eine zylindrische äußere Mantelfläche aufweisenden Griffteilschenkel (34) anliegen.

5. Transportroller nach Anspruch 3, dadurch gekennzeichnet, daß die zum Aufsetzen auf den Scheitelteil (24) des Hauptrahmens (21) aufspreizbare Schelle (37) an ihrer inneren Mantelfläche einen in Aufsteckrichtung verlaufenden, angespitzten Dorn (41) aufweist, der in eine entsprechende Aussparung (42) im Scheitelteil (24) des Hauptrahmens (21) eingreift.

6. Transportroller nach einem der Ansprüche 1 bis 5, dadurch gekennzeichnet, daß die obere Führung (32) für den Griffteilschenkel (34) einstückig aus Kunststoff gefertigt ist.

7. Transportroller nach einem der Ansprüche 1 bis 6, dadurch gekennzeichnet, daß an der äußeren Mantelfläche der Führungsbüchse (43) eine rohrförmige Aufnahme (44) zum Einstecken des die beiden Hauptrahmenschenkel (25) miteinander verbindenden Quersteges (35) vorgesehen ist.

8. Transportroller nach Anspruch 7, dadurch gekennzeichnet, daß die Führungsbüchse (43) an ihrer zylindrischen inneren Mantelfläche (47) axial verlaufende rippenförmige Vorsprünge (48) aufweisen, die mit ihren teilzylinderförmigen Anlageflächen gegen den eine zylindrische äußere Mantelfläche aufweisenden Griffteilschenkel (34) anliegen.

9. Transportroller nach einem der Ansprüche 1 bis 8, dadurch gekennzeichnet, daß die untere Führung (33) für den Griffteilschenkel (34) einstückig aus Kunststoff gefertigt ist.

10. Transportroller nach einem der Ansrüche 1 bis 9, dadurch gekennzeichnet, daß die aus Kunststoff gefertigten Endstücke (53) mit abgesetzten Ansätzen (55) in den freien Enden der Griffteilschenkel (34) formschlüssig durch Festkörnen gehalten sind.

11. Transportroller nach einem der Ansprüche 1 bis 10, dadurch gekennzeichnet, daß die dem Griffteilschenkel (34) zugekehrte Seitenfläche (57) der die Rastausnehmung bildenden umlaufenden Nut (54) des Endstückes (53) an ihrem äußeren Rand mit einer zum Aufspreizen des die Rastvorsprünge aufweisenden axial geschlitzten Verlängerung (50) der unteren Führung (33) dienenden Abrundung (58) versehen ist.

12. Transportroller nach einem der Ansprüche 1 bis 11, dadurch gekennzeichnet, daß die Rastvorsprünge (51) an ihren den Abrundungen (58) der Seitenfläche der umlaufenden Nut (54) zugekehrten Seite ebenfalls mit Abrundungen (59) versehen sind.

13. Transportroller nach einem der Ansprüche 1 bis 12, dadurch gekennzeichnet, daß die dem Griffteilschenkel (34) abgekehrte zweite Seitenfläche (60) der die Rastausnehmung bildenden umlaufenden Nut (54) des Endstückes (53) mit den Rastvorsprüngen (51) der unteren Führung (33) einen Endanschlag (61) für die Verschiebbarkeit des Griffteiles (29) bildet.

14. Transportroller nach einem der Ansprüche 1 bis 13, dadurch gekennzeichnet, daß das freie Ende des Endstückes (53) mit einer konischen Anfasung (62) versehen ist.

15. Transportroller nach einem der Ansprüche 1 bis 14, dadurch gekennzeichnet, daß die lichte Weite der Schlitze (52) der rohrförmigen Verlängerung (50) der Führungsbüchse (43) der unteren Führung (33) der Breite der rippenförmigen Vorsprünge (39, 48) an den inneren zylindrischen Mantelflächen (38, 47) der Führungsbüchsen (36, 43) der oberen und der unteren Führung (32, 33) entsprechen, die fluchtend zueinander angeordnet sind.

16. Transportroller nach einem der Ansprüche 1 bis 15, dadurch gekennzeichnet, daß das aus dem Griffteilschenkel (34) herausragende Ende des Endstückes (53) einen den Außendurchmesser des Griffteilschenkels (34) überschreitenden Durchmesser aufweist und im wesentlichen dem Innendurchmesser der die axial verlaufenden rippenförmigen Vorsprünge (39, 48) aufweisenden inneren Mantelfläche (38, 47) der Führungsbüchse (36, 43) entspricht und dabei axial verlaufende, den rippenförmigen Vorsprüngen (39, 48) entsprechende Nuten (63) aufweist.

17. Transportroller nach einem der Ansprüche 1 bis 16, dadurch gekennzeichnet, daß das aus dem Griffteilschenkel (34) herausragende Ende des Endstückes (53) vier axial verlaufende Nuten (63) und die Führungsbüchsen (36, 43) vier axial verlaufende rippenförmige Vorsprünge (39, 48) aufweisen.

18. Transportroller nach einem der Ansprüche 1 bis 17, dadurch gekennzeichnet, daß der Griffteilschenkel (34) an seinem freien Ende eine umlaufende Sicke (66) als Rastausnehmung aufweist und das Ende flanschartig als Endanschlag (61) nach außen verläuft.

19. Transportroller nach einem der Ansprüche 1 bis 18, dadurch gekennzeichnet, daß das in das freie Ende des Griffteilschenkels (34) eingesetzte Endstück (53) einen Flansch (69) mit einem geschlitzten rohrförmigen Ansatz (70) aufweist, an dessen innerer Mantelfläche nasenförmige Vorsprünge (71) angeformt sind, die mit an der äußeren Mantelfläche der Führungsbüchse (43) der unteren Führung (33) vorgesehenen nasenförmigen Vorsprünge (72) als Verrastung zusammenwirken.

20. Transportroller nach einem der Ansprüche 1 bis 19, dadurch gekennzeichnet, daß das freie Ende des von einem Zylinderrohr gebildeten Griffteilschenkels (34) abgeplattet ist und die Führungsbüchse (43) der unteren Führung (33) einen entsprechend gestalteten, als Endanschlag dienenden Durchbruch (73) aufweist und die rohrförmige, axial geschlitzte Verlängerung (50) der Führungsbüchse (43) an der inneren Mantelfläche als Rastvorsprünge dienende rippenförmige Vorsprünge (74) aufweist, die mit den Schrägflächen (75) der Abplattung als Verrastung zusammenwirken.

21. Transportroller nach einem der Ansprüche 1 bis 20, dadurch gekennzeichnet, daß der Griffteilschenkel (34) an seinem freien Ende Endanschläge (61) aufweist, die von nach außen herausgewinkelten, gestanzten Zungen (67) gebildet sind und die geneigt verlaufende Rücken (68) der Zungen (67) als Spreizflächen für die Rastvorsprünge (51) dienen.

22. Transportroller nach einem der Ansprüche 1 bis 21, dadurch gekennzeichnet, daß auf dem die beiden Hauptrahmenschenkel (25) miteinander verbindenden und die beiden unteren Führungen (33) tragenden Quersteg (35) Distanzhülsen (45, 46) zwischen den beiden unteren Führungen (33) und zwischen den unteren Führungen (33) und den Hauptrahmenschenkel (25) aufgesetzt sind.

## Claims

1. Transport trolley, especially a shopping trolley, with an essentially vertically arranged main frame (21) supported by wheels (20) and with a bearing frame (22) provided at its lower end and intended for a container which can be fastened to the main frame, the main frame having an extendable handle part (29) which can be locked in the extended position and which is formed from a U-shaped hoop (30) with legs (34) projecting downwards and inserted in guides of the main frame, each of the two legs (34) of the handle part (29) formed from a U-shaped hoop (30) being inserted respectively in guides (32, 33) provided on the main frame (21), and one guide (33) having a resilient engagement projection (51) which interacts with an engagement recess (54) provided at the free end of the associated leg (34), characterised in that the guides consist of an upper guide (32) and a lower guide (33), the lower guide (33) having a guide bush (43) and, on its lower end face, a tubular and axially slotted extension (50), the free end of which is angled inwards to form engagement projections (51), and that the U-shaped hoop (30) forming the handle part (29) is formed from a tubular section, and the free ends of the legs (34) of the handle part have inserted in them end pieces (53) which each have, at their ends projecting from the ends of the legs (34) of the handle part, a continuous groove (34) interacting with the engagement projections (51) of the lower guides (33) and forming an engagement recess.

2. Transport trolley according to claim 1, characterised in that the two upper guides (32) of the two legs (34) of the handle part (29) formed from a U-shaped hoop (30) are provided on the apex part (24) of the main frame (21) likewise formed from a U-shaped hoop (23), whilst the two lower guides (33) of the two legs (34) of the handle part are provided on a crossmember (35) connecting the two mainframe legs (25) to one another.

3. Transport trolley according to claim 1 or 2, characterised in that the upper guide (32) for the leg (34) of the handle part consists of two guide bushes (36) which are arranged coaxially relative to one another and which are connected to one another by means of a clip (37) which can be spread open so as to be attached to the apex part (24) of the main frame (21).

4. Transport trolley according to claim 3, characterised in that the guide bushes (36) have, on their cylindrical inner shell surfaces (38), axially extending ribshaped projections (39) which, by means of their bearing surfaces (40) in the form of parts of cylinders, rest against the handle-part leg (34) which has a cylindrical outer shell surface.

5. Transport trolley according to claim 3, characterised in that the clip (37) which can be spread open so as to be attached to the apex part (24) of the main frame (21) has on its inner shell surface a pointed peg (41) which extends in the direction of attachment and which engages into a corresponding recess (42) in the apex part (24) of the main frame (21).

6. Transport trolley according to one of claims 1 to 5, characterised in that the upper guide (32) for the handle-part leg (34) is produced in one piece from plastic.

7. Transport trolley according to one of claims 1 to 6, characterised in that a tubular receptacle (44) for inserting the crossmember (35) connecting the two main-frame legs (25) to one another is provided on the outer shell surface of the guide bush (43).

8. Transport trolley according to claim 7, characterised in that the guide bush (43) has on its cylindrical inner shell surface (47) axially extending rib-shaped projections (48) which, by means of their bearing surfaces in the form of parts of cylinders, rest against the handle-part leg (34) having a cylindrical outer shell surface.

9. Transport trolley according to one of claims 1 to 8, characterised in that the lower guide (33) for the handle-part leg (34) is produced in one piece from plastic.

10. Transport trolley according to one of claims 1 to 9, characterised in that the end pieces (53) made of plastic are retained positively, by means of offset lengthening pieces (55), in the free ends of the handle-part legs (34) as a result of centre-punching.

11. Transport trolley according to one of claims 1 to 10, characterised in that the side face (57), turned towards the handle-part leg (34), of the continuous groove (54) forming the engagement recess and belonging to the end piece (53) is provided at its outer edge with a rounded-off portion (58) which serves for spreading open the axially slotted extension (50) having the engagement projections and belonging to the lower guide (33).

12. Transport trolley according to one of claims 1 to 11, characterised in that the engagement projections (51) are likewise provided with rounded-off portions (59) on their side facing the rounded-off portions (58) of the side face of the continuous groove (54).

13. Transport trolley according to one of claims 1 to 12, characterised in that the second side face (60), turned away from the handle-part leg (34), of the continuous groove (54) forming the engagement recess and belonging to the end piece (53) forms, together with the engagement projections (51) of the lower guide (33), an end stop (61) for the displaceability of the handle part (29).

14. Transport trolley according to one of claim 1 to 13, characterised in that the free end of the end piece (53) is provided with a conical chamfer (62).

15. Transport trolley according to one of claims 1 to 14, characterised in that the clear width of the slots (52) in the tubular extension (50) of the guide bush (43) of the lower guide (33) corresponds to the width of the ribshaped projections (39, 48) on the inner cylindrical shell surfaces (38, 47) of the guide bushes (36, 43) of the upper and the lower guide (32, 33) which are aligned with one another.

16. Transport trolley according to one of claims 1 to 15, characterised in that the end of the end piece (53) projecting from the handle-part leg (34) has a diameter exceeding the outside diameter of the handle-part leg (34) and corresponds essentially to the inside diameter of the inner shell surface (38, 47), having the axially extending rib-shaped projections (39, 48), of the guide bush (36, 43) and at the same time has axially extending grooves (63) corresponding to the rib-shaped projections (39, 48).

17. Transport trolley according to one of claims 1 to 16, characterised in that the end of the end piece (53) projecting from the handle-part leg (34) has four axially extending grooves (63), and the guide bushes (36, 43) have four axially extending rib-shaped projections (39, 48).

18. Transport trolley according to one of claims 1 to 17, characterised in that the handle-part leg (34) has at its free end a continuous bead (66) functioning as an engagement recess, and the end extends outwards in the manner of a flange as an end stop (61).

19. Transport trolley according to one of claims 1 to 18, characterised in that the end piece (53) inserted into the free end of the handle-part leg (34) has a flange (69) with a slotted tubular lengthening piece (70), on the inner shell surface of which are formed nose-shaped projections (71) which interact as a lock with nose-shaped projections (72) provided on the outer shell surface of the guide bush (43) of the lower guide (33).

20. Transport trolley according to one of claims 1 to 19, characterised in that the free end of the handle-part leg (34) formed by a cylindrical tube is flattened, and the guide bush (43) of the lower guide (33) has an appropriately shaped perforation (73) serving as an end stop, and the tubular axially slotted extension (50) of the guide bush (43) has on the inner shell surface rib-shaped projections (74) which serve as engagement projections and which interact as a lock with the sloping surface (75) of the flattened portion.

21. Transport trolley according to one of claims 1 to 20, characterised in that the handle-part leg (34) has at its free end end stops (61) which are formed by stamped tongues (67) angled outwards, and the inclined backs (68) of the tongues (67) serve as spreading surfaces for the engagement projections (51).

22. Transport trolley according to one claims 1 to 21, characterised in that spacer sleeves (45, 46) between the two lower guides (33) and between the lower guides (33) and the main-frame legs (25) are attached to the crossmember (35) which connects the two main-frame legs (25) to one another and which carries the two lower guides (33).

**Revendications**

1. Chariot de transport, en particulier chariot pour achats, avec un châssis principal (21) disposé d'une manière essentiellement verticale et supporté par des roues (20) et un châssis de support (22) prévu à l'extrémité inférieure du premier, pour un conteneur pouvant être fixé au châssis principal, où le châssis principal présente une poignée (29), constituée d'un étrier (30) en forme du U, avec des montants (34) dirigés vers le bas et insérés dans les guides du châssis principal, cette poignée pouvant être soulvée et fixée en position soulevée, chacun des deux montants (34) de la poignée (29) constituée d'un étrier (30) en forme de U s'insérant dans l'un des guides (32, 33) prévus sur le châssis principal (21) et un guide (33) présentant une saillie d'accrochage à ressort (51) qui correspond à la cavité d'accrochage (54) prévue à l'extrémité libre du montant correspondant (34), caractérisé en ce que les guides sont constitués d'un guide supérieur (32) et d'un guide inférieur (33), le guide inférieur (33) présentant une douille de guidage (43) et, sur la surface frontale de cell-ci, un prolongement tubulaire (50) fendu axialement, dont l'extrémité libre est pliée vers l'intérieur pour former les saillies d'accrochage (51), et en ce que l'étrier (30) en forme de U et constituant la poignée (29) est formé d'une section de tube et est inséré dans les extrémités libres des pièces d'extrémités (53) des montants de poignées (34), qui présentent à leurs extrémités faisant saillie hors des extrémités des montants de poignées (34) une rainure périphérique (54) formant une cavité d'accrochage et correspondant aux saillies d'accrochage (51) des guides inférieurs (33).

2. Chariot de transport selon la revendication 1, caractérisé en ce que les deux guides supérieurs (32) des deux montants (34) de la poignée (29) constitués d'une étrier (30) en forme de U, sont prévus à la partie supérieure (24) du châssis principal (21), constitué également d'un étrier (32) en forme de U, tandis que les deux guides inférieurs (33) des deux montants de poignée (34) sont prévus sur une traverse (35) reliant les deux montants (25) du châssis principal.

3. Chariot de transport selon la revendication 1 ou 2, caractérisé en ce que le guide supérieur (32) pour le montant de poignée (34) est constitué de deux douilles de guidage (36) disposées coaxialement l'une par rapport à l'autre et reliées par un collier extensible (37), à placer sur la partie supérieure (24) du châssis principal (21).

4. Chariot de transport selon la revendication 3, caractérisé en ce que les douilles de guidage (36) présentent des saillies (39) disposées sous forme de nervures axiales sur leurs surfaces cylindriques intérieures (38) et qui reposent par leurs surfaces de contact (40) en forme d'élément de cylindre sur le montant de poignée (34) présentant une surface extérieure cylindrique.

5. Chariot de transport selon la revendication 3, caractérisé en ce que le collier extensible (37), à disposer sur la partie supérieure (24) du châssis principal (21), présente sur sa surface intérieure une broche pointue (41) dirigée dans la direction de l'emboîtement et que s'emboîte dans une cavité correspondante (42) de la partie supérieure (24) du châssis principal (21).

6. Chariot de transport selon l'une des revendications 1 à 5, caractérisé en ce que le guide supérieur (32) pour le montant de poignée (34) est réalisé en une pièce en matière plastique.

7. Chariot de transport selon l'une des revendications 1 à 6, caractérisé en ce qu 'un logement tubulaire (44) est prévu sur la surface extérieure de la douille de guidage (43) pour l'emboîtement de la traverse (35) reliant les deux montants (25) du châssis principal.

8. Chariot de transport selon la revendication 7, caractérisé en ce que les douilles de guidage (43) présentent des saillies (48) disposées en forme de nervures axiales sur leur surface intérieure cylindrique (47) et qui reposent par leurs surfaces de contact en forme d'élément de cylindre sur le montant de poignée (34) présentant une surface extérieure cylindrique.

9. Chariot de transport selon l'une des revendications 1 à 8, caractérisé en ce que le guide inférieur (33) pour le montant de poignée (34) est réalisé en une pièce en matière plastique.

10. Chariot de transport selon l'une des revendications 1 à 9, caractérisé en ce que les pièces d'extrémités (53) réalisées en matière plastique sont maintenues fermement par blocage dans les extrémités libres des montants de poignée (34) au moyen de taquets à redan (55).

11. Chariot de transport selon l'une de revendications 1 à 10, caractérisé en ce que la face latérale (57) tournée vers le montant de poignée (34) de la rainure périphérique (54) constituant la cavité d'accrochage de la pièce c'extrémité (53), est pourvue sur son bord extérieur d'un arrondi (58) servant à la dilatation du prolongement (50) fendu axialement et présentant les saillies d'accrochage du guide inférieur (33).

12. Chariot de transport selon l'une des revendications 1 à 11, caractérisé en ce que les saillies d'accrochage (51) sont pourvues également d'arrondis (59) sur leur face tournée vers les arrondis (58) de la face latérale de la rainure périphérique (54).

13. Chariot de transport selon l'une des revendications 1 à 12, caractérisé en ce que les deux faces latérales (60) opposées aux montants de poignée (34) de la rainure périphérique (54) constituant la cavité d'accrochage de la pièce d'extrémité (53) forment une butée d'extrémité (61) pour le mouvement à coulisse de la poignée (29), en combinaison avec les saillies d'accrochage (51) du guide inférieur (33).

14. Chariot de transport selon l'une des revendications 1 à 13, caractérisé en ce que l'extrémité libre de la pièce d'extrémité (53) est pourvue d'un biseau conique (62).

15. Chariot de transport selon l'une des revendications 1 à 14, caractérisé en ce que la lumière de la fente (52) du prolongement tubulaire (50) de la douille de guidage (43) du guide inférieur (33) est adaptée à la largeur des saillies en forme de nervures (39, 48) des surfaces intérieures cylindriques (38, 47) des douilles de guidage (36, 43) des guides supérieurs et inférieurs (32, 33), qui sont disposés de façon à être au même niveau.

16. Chariot de transport selon l'une des revendications 1 à 15 caractérisé en ce que l'extrémité de la pièce c'extrémité (53), qui sort du montant de poignée (34), présente un diamètre supérieur au diamètre extérieur du montant de poignée (34) et correspondant essentiellement au diamètre intérieur des surfaces intérieures (38, 37) des douilles de guidage (36, 43) présentant des saillies (39, 48) disposées en forme de rainures axiales, et présentant des rainures (63) correspondant aux saillies (39, 48) disposées en forme de nervures axiales.

17. Chariot de transport selon l'une des revendications 1 à 16, caractérisé en ce que l'extrémité de la pièce d'extrémité (53) qui sort du montant de poignée (34) présente quatre rainures (63) disposées axialement et que les douilles de guidage (36, 43) présentent quatre saillies (39, 48) disposées sous forme de nervures axiales.

18. Chariot de transport selon l'une des revendications 1 à 17, caractérisé en ce que le montant de poignée (34) présente à son extrémité libre un bourrelet périphérique (66) servant de cavité d'accrochage et que l'extrémité se continue vers l'extérieur sous forme d'une bride constituant une butée d'extrémité (61).

19. Chariot de transport selon l'une des revendications 1 à 18, caractérisé en ce que la pièce d'extrémité (53) insérée dans l'extrémité libre du montant de poignée (34) présente une bride (69) avec une pièce rapportée (70) tubulaire et fendue, sur la surface intérieure de laquelle sont formées des saillies (71) en forme de nez, qui permettent un accrochage en combinaison avec les saillies (72) en forme de nez, prévues sur la surface extérieure des douilles de guidage (43) du guide inférieur (33).

20. Chariot de transport selon l'une des revendications 1 à 19, caractérisé en ce que l'extrémité libre du montant de poignée (34) constituée d'un tube cylindrique est aplatie et que la douille de guidage (43) du guide inférieur (33) présente une perforation (73) servant de butée d'extrémité disposée d'une manière appropriée, et que le prolongement (50) tubulaire et fendu axialement de la douille de guidage (43) présente des saillies (74) en forme de nervures et servant de saillies d'accrochage sur la surface intérieure, de façon à réaliser l'accrochage en combinaison avec les faces obliques (75) de la partie aplatie.

21. Chariot de transport selon l'une des revendications 1 à 20, caractérisé en ce que le montant de poignée (34) présente à son extrémité libre des butées d'extrémité (61) qui sont constituées de languettes estampées (67) repliées vers l'extérieur et que les faces arrières disposées obliquement (68) des languettes (67) servent de surface de dilatation pour les saillies d'accrochage (51).

22. Chariot de transport selon l'une des revendications 1 à 21, caractérisé en ce que des entretoises (45, 46) sont disposées entre les deux guides inférieurs (33) et entre les guides inférieurs (33) et les montants du châssis principal (25) sur la traverse (35) reliant les deux montants du châssis principal (25) et supportant les deux guides inférieurs (33).

FIG. 2

FIG.3

FIG.4

FIG.5

FIG.6

FIG.7

FIG.8

FIG.9

0 033 092

FIG.10

FIG.11

19

# FIG.12

FIG.13

FIG.14

FIG.15

FIG.16

FIG.17